# EUROPÄISCHE PATENTSCHRIFT

(11) **EP 0 768 056 B1**
(45) Veröffentlichungstag und Bekanntmachung des Hinweises auf die Patenterteilung: **28.07.1999**
(21) Anmeldenummer: 96107748.4
(22) Anmeldetag: 15.05.1996
(51) Int. Cl.: A47J 37/07

(54) **Grill- und Kochgerät, insbesondere Tischgrill**
Barbecue and cooking device, in particular barbecue table
Appareil de barbecue et de cuisson, en particulier table-barbecue

(30) Priorität: 16.10.1995 DE 29516372 U
(43) Veröffentlichungstag der Anmeldung: 16.04.1997
(73) Patentinhaber: ZIBROWIUS GmbH, 14190 Berlin (DE)
(72) Erfinder: Zibrowius, Klaus, 14199 Berlin (DE)
(74) Vertreter: Hoffmann, Klaus-Dieter, Dipl.-Ing.

(56) Entgegenhaltungen:
- EP-A- 0 648 460
- US-A- 4 188 937
- US-A- 4 553 524
- US-A- 4 705 020

## Beschreibung

Die Erfindung betrifft ein Grill- und Kochgerät, insbesondere einen Tischgrill, mit einem Standbeine aufweisenden Rahmengestell, einer Auflage für Grillgut und/oder einen Kochtopf, eine Pfanne oder dgl. und mit einem mittig im Rahmengestell angeordneten Brenner, der über eine Brennstoffzuführung mit einem Brennstoffreservoir verbunden ist.

Grillgeräte, die im Freien eingesetzt werden und ein Rahmengestell mit einem nach oben offenen Kasten für Grillkohle und einer über dem Kasten abnehmbar angeordneten, rostartigen Auflage für das Grillgut sind binlänglich bekannt. Zum einen sind solche Grillgeräte für gewöhnlich verhältnismäßig groß und zum anderen erfordern sie stets den Transport der Grillkohle zu ihrem Einsatzort.

Bekannt sind weiterhin Petroleum-Kocher mit einem Back- und Grillaufsatz (DE-U-80 27 801.9), deren Brenntopf von einem nach oben offenen Gehäuse umfaßt ist, auf das ein trichterförmiges Ringelement aufgesetzt ist, auf das eine einseitig gewölbte Back- und Grillplatte aufgelegt ist. Derartige Petroleum-Kocher sind zwar insbesondere bei Campern beliebt, sind aber auch verhältnismäßig groß und bedingen zudem ein Petroleum spezieller Güte.

Es hat sich gezeigt, daß ein Bedarf an verhältnismäßig kleinen Grill- und Kochgeräten bestehe, bei denen das in handlichen Druckgasbehältern enthaltene Gas als Brennstoff verwendbar ist und insbesondere beim Transport oder Lagern kein großer Raumbedarf erforderlich ist.

Der Erfindung liegt daher die Aufgabe zugrunde, ein Grill- und Kochgerät, insbesondere einen Tischgrill der eingangs erwähnten Art zur Verfügung zu stellen, das bzw. der sich praktisch handhaben läßt und zugleich beim Einsatz und Transport oder Lagern keinen großen Raumbedarf erfordert.

Diese Aufgabe wird erfindung gemäß dadurch gelöst, daß das Rahmengestell ein kreiszylindrisches Unterteil aufweist,das sich an seinem oberen Rand in ein sich stufenmäßig nach außen aufweitendes, schüsselartiges Oberteil fortsetzt, dessen Boden eine zentrische Öffnung hat, deren Durchmesser größer als der Durchmesser des Gehäuses des Brenners ist, daß unterhalb des Bodens des Oberteils am Innenmantel des Unterteils eine Halterungseinrichtung befestigt ist, von der das Gehäuse des Brenners zentrisch in der Bodenöffnung des Oberteils gehaltert ist, daß die Auflage, die Öffnung des Bodens des Oberteils überdeckend, auf diesem abnehmbar gehaltert ist, wobei Durchzugsöffnungen zwischen dem Oberteil und der Auflage gegeben sind, daß drei Standbeine, deren Länge kürzer als der Innendirchmesser des kreiszlindrischen Unterteils des Rahmengestells ist, jeweils im 120^{o} zueinander versetzt an der Halterungseinrichtung mit ihrem oberen Ende so verschwenkbar gehaltert sind, daß in einem Lager- bzw. Transportzustand des Grill- und Kochgerätes in dem kreiszylindrischen Unterteil übereinanderliegend und sich kreuzend versenke und parallel zur Halterungseinrichtung angeordnet sind, und im Betriebszustand des Grill- und Kochgerätes in eine arretierte Stellung verschwenkt sind,in der sie unter einem spitzen Winkel nach außen zu der durch ihre Schwenkachse verlaufenden Vertikalen angeordnet sind und den Innenmantel des kreiszylindrischen Unterteils berühren, und daß ein Gaszuführungsrohr einerseits in das Gehäuse des Brenners mündet und andererseits die Wand des kreiszylindrischen Unterteils durchsetzend in einem sich von dessen Außenmantel nach außen erstreckenden Anschlußflansch ausläuft, mit dem trennbar ein ein Stellventil aufweisendes Anschlußrohr eines Standbehälters verbunden ist, in dem auswechselbar ein an das Anschlußrohr des Standbehälters angeschlossener Druckgasbehälter aufgenommen ist.

Vorzugsweise ist der Boden des Oberteils des Rahmengestells wie bei einer üblichen Kuchenbackform ausgebildet, d.h.,der Boden des Oberteils hat eine mittige, die Öffnung aufweisende Erhebung, die von einer Sammelrinne zur Aufnahme z.B. von Fett oder Kondenzwasser umfaßt ist. Das Unterteil und schalenartige Oberteil des Rahmengestells sind bevorzugt als einstückiges Formteil, z.B. aus Aluminium hergestellt.

Bei einer bevorzugten Form der Erfindung weist die Halterungseinrichtung eine kreisringförmige Platte auf, deren Innendurchmesser geringfügig größer als der Außendurchmesser des Brenners für dessen geeigneten Paßsitz in der Öffnung der ringförmigen Platte ist.Der Außendurchmesser letzterer ist kleiner als der Durchmesser der Bodenöffnung des Oberteils des Rahmengestells. Weiterhin weist die kreisringförmige Platte drei mit ihr einstückig ausgebildete Stege auf, die zueinander um 120^{o} versetzt sind und sich vom Außenumfang der kreisringförmigen Platte in deren Ebene zum Innenmantel des kreiszylindrischen Unterteils des Rahmengestells erstrecken, an ihren zur Platte entgegengesetzten Enden jeweils einen sich rechtwinklig abwärts erstreckenden Befestigungsflansch aufweisen, der am Innenmantel des Unterteils befestigt ist. Der Befestigungsflansch weist an seinen vertikal verlaufenden Kanten jeweils eine im rechten Winkel abgewinkelte, sich in den Innenraum des kreiszylindrischen Unterteils erstreckende, gleichartige Befestigungslasche auf, deren untere horizontale Kante jeweils eine eine Arretierung bildende Auskragung aufweist und in denen mittig, sich senkrecht zum zugeordneten Steg der kreisringförmigen Platte erstreckend die Schwenkachse geführt ist, an der das obere Ende des zugeordneten Standbeins drehbar gelagert ist. Das untere Ende der Standbeine kann jeweils unter Bildung einer Standfläche nach außen abgewinkelt sein. Auch können die Standbeine teleskopartig ausgebildet und im Lagerzustand zusammengeschoben und in den Innenraum des Unterteils des Rahmengestells verschwenkt versenkt sein.

Vorzugsweise weist der Standbehälter ein domartiges Oberteil auf, das mit dem Unterteil de Standbehälters abnehmbar verschraubt ist und an seiner oberen Fläche zu einem einstückig mit ihm ausgebildeten Anschlußzapfen ausgebildet ist, in dem innen das Druckventil des auswechselbaren Druckgasbehälters im verschraubten Zustan des domartigen Oberteils und des Unterteils des Standbehälters geöffnet aufgenommen ist und von dem nach außen das das Stellventil aufweisende Anschlußrohr geführt ist. Als Druckgasbehälter kann ein gängige handliche Gassprühdose mit Heizgas verwendet werden, wie sie z.B. bei Tankstellen erhältlich ist.

Der Standbehälter mit dem domartigen Oberteil ist vorzungsaus einen feuersicheren Material aus Sicherheitsgründen hergestellt. Bei dem Stellventil in dem Anschlußrohr des Standbehälters handelt es sich geeigneterweise um ein von handbetätigbares, ein Stellrad aufweisandes Ventil, das bequem und sicher zu öffnen und zu schließen ist.

Die Auflage für das Grillgut ist bevorzugt von einer gewölbten Aluminiumplatte gebildet, deren konvere Oberfläche eine Teflonbeschichtung aufweist. Für Kochzwecke kann die Auflage, auf der ein Kochtopf, eine Pfanne oder dgl. deponiert werden soll, aus konzentrische, zueinander beabstandeten Metallringen gebildet sein, die durch im Abstand von 120^{o} zueinander versetzte Trägerelemente verbunden sind, deren Enden unter Bildung von Stützflächen jeweils abgewinkelt sind und einerseits auf dem Boden des Oberteils des Rahmengestells in der Sammelrinne und andererseits auf der oberen Fläche des Brenners so abgestützt sind, daß die tragende Fläche der Auflage parallel zum Boden des Oberteils im Abstand oberhalb der Ebene liegt, in der die oberen Fläche des Brenners liegt.

Der Durchmesser der Bodenöffnung des Oberteils ist vorzugsweise dreimal so groß wie der Durchmesser des Brenners und der Abstand zwischen der kreisringförmigen Platte der Halterungseinrichtung und dem Boden des Oberteils ist im zentrischen Bereich des Grill- und Kochgerätes so gewählt, daß ausgezeichnete Lüftungs- und Strömungsverhältnisse gegeben sind, die Umwelt- und Sicherheitsbestimmungen entsprechend genügen. Die Auflage für Grillgut in Form einer schüsselartigen Platte, auf deren konvexer Oberfläche die Teflonbeschichtung vorgesehen ist, weist um ihren Umfang im Abstand zueinander angeordnete Luftungslöcher geeigneter Größe auf.

Ebenfalls können im Unterteil des Rahmengestells Lüftungsöffnungen vorgesehen sein, die über den Umfang des Unterteils im gleichen Abstand zueinander angeordnet sind.

Das Anschlußrohr des den Druckgasbehälterenthaltenen Standbehälters, dessen Standfläche in der Ebene der Standfläche der Standbeine 2 liegt und der eine ausgezeichnte Stabilisierung der Standfestigkeit des Grill- und Kochgerätes im Betriebszustand gewährleistet, ist leicht und sicher mit mit dem Anschlußflansch des Gaszuführungsrohres verbindbar, z.B. mittels eines Bajonettverschlusses, und von diesem trennbar.

Bevorzugt weisen der Standbehälter und das Grill- und Kochgerät eine Höhe von 19 cmm bzw. 24 cmm auf, wobei das Unterteil und das Oberteil einen Innendurchmesser von 22 cm bzw. 34 cm aufweisen, der Durchmesser der Bodenöffnung und der kreisringförmigen Platte der Halterungseinrichtung sowie die schüsselartige Auflage für das Grillgut einen Durchmesser von 12 cm bzw. 10 cm bzw. 27 cm aufweisen.

Das erfindungsgemäße Grill- und Kochgerät hat vorzugsweise ein Gewicht von 2,5 kg und ist durch die Verschwenkbarkeit seiner Standbeine, die im Unterteil des Rahmengestellt versenkbar sind, in einer äußerst kompakten Weise transportierbar. Durch seine verhältnismäßig geringe Höhe und seine gute Stabilität eignet sich das Koch- und Grillgerät besonders zum Einsatz auf Tischen und dergleichen Unterlagen.

Bei einer bevorzugten Ausführungsform des erfindungsgemäßen Grill- und Kochgerätes, bei der eine feinstufige Regulierung der Gaszufuhr aus dem Druckgasbehälter zum Brenner gegeben ist, wird das Druckventil des Druckgasbehälters von einer Öffnung im Anschlußzapfen des Oberteils des Standbehälters so aufgenommen, daß es von einer in der vertikalen Achse des Anschlußzapfens bewegbaren, gewindemäßig geführten Kolbenstange des im Anschlußzapfen gehalterten Stellventils schrittweise geöffnet oder geschlossen werden kann, wobei die strömungsmäßige Verbindung zwischen dem Druckgasbehälter und dem vom Anschlußzapfen nach außen geführten Anschlußrohr feinstufig regulier- bzw. unterbrechbar ist.

Bevorzugt ist am Außenende der im Gehäuse des Stellventils gewindemäßig geführten Kolbenstange ein Drehrad vorgesehen, bei dessen Drehung in Uhrzeiger- oder in Gegenuhrzeigerrichtung das Druckventil des Druckgasbehälters vom Innenende der Kolbenstange stufenweise geöffnet bzw. geschlossen wird, wobei die Gasströmung vom Druckgasbehälter in das vom Anschlußzapfen nach außen geführte und mit dem Brenner verbundene Anschlußrohr stufenweise vergrößert bzw. gedrosselt wird. Bei Anordnung des Druckventils in der Öffnung des Anschlußzapfens sorgt eine den Außenmantel des Druckventils umfassende Dichtung dafür, daß bei geöffnetem Druckventil ein Entweichen von Druckgas in das Oberteil des Standbehälters vermieden wird.

Vorzugsweise ist in der Halterungseinrichtung, von der das Gehäuse des Brenners zentrisch in der Bodenöffnung des Oberteils gehaltert ist, in unmittelbarer Nähe des Brenners ein Gasanzünder befestigt, der über eine im kreiszylindrischen Unterteil des Rahmengestells gehalterte Druckfedereinrichtung per Rand betätigbar ist. Der Gasanzünder kann von einem piezoelektrischen Element gebildet sein.

Vorteilhafte Ausführungsformen der Erfindung werden nun anhand der Zeichnungen beschrieben. In diesen sind:
- Fig. 1: eine schematische Seitenansicht einer Ausführungsform des Grill- und Kochgerätes,
- Fig. 2: eine perspektivische Ansicht des einstückig geformten Rahmengesetllt aus Ober- und Unterteil in umgekehrter Stellung mit in den Innenraum des Unterteils versenkten Standbeinen,
- Fig. 3: die Ansicht eines Längsschnitts durch das Rahmengestell, wobei sowohl die Auflage für das Grillgut, als auch die Auflage für einen Kochtopf,eine Pfanne oder dgl. und ein Standbein in der arretierten Betriebsstellung gezeigt sind,
- Fig. 4: eine Draufsicht der Unterseite des Rahmengestells ohne die Standbeine und ihre Lagerung,
- Fig. 5: eine Draufsicht auf die Unterseite der Auflage für das Grillgut und
- Fig. 6: die Ansicht eines Längsschnitts des Standbehälters einer bevorzugten Ausführung der Erfindung.

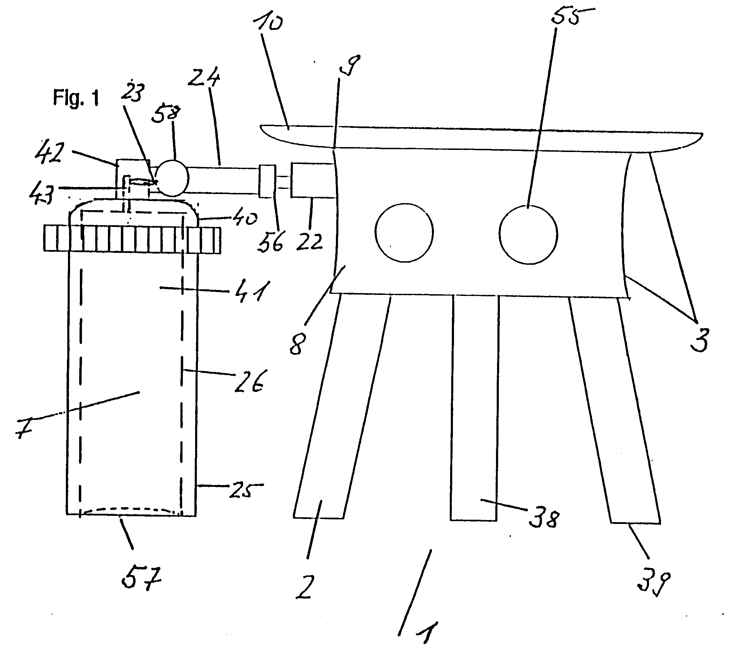

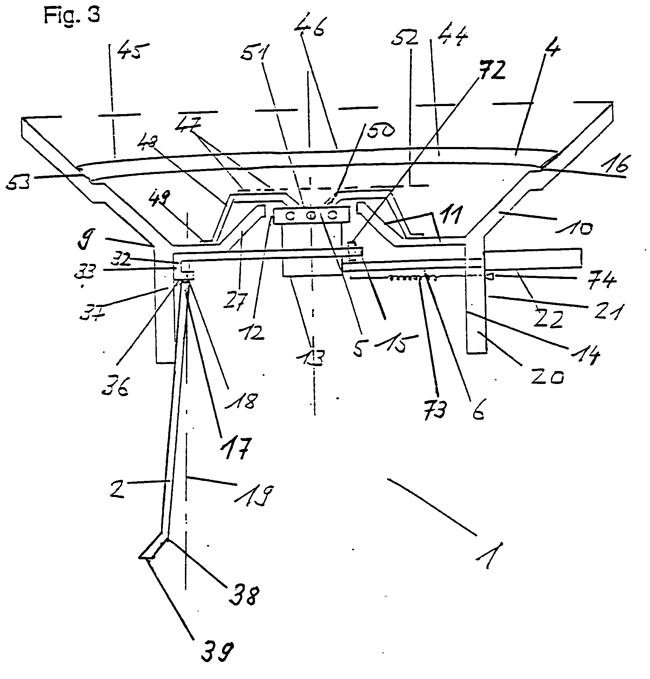

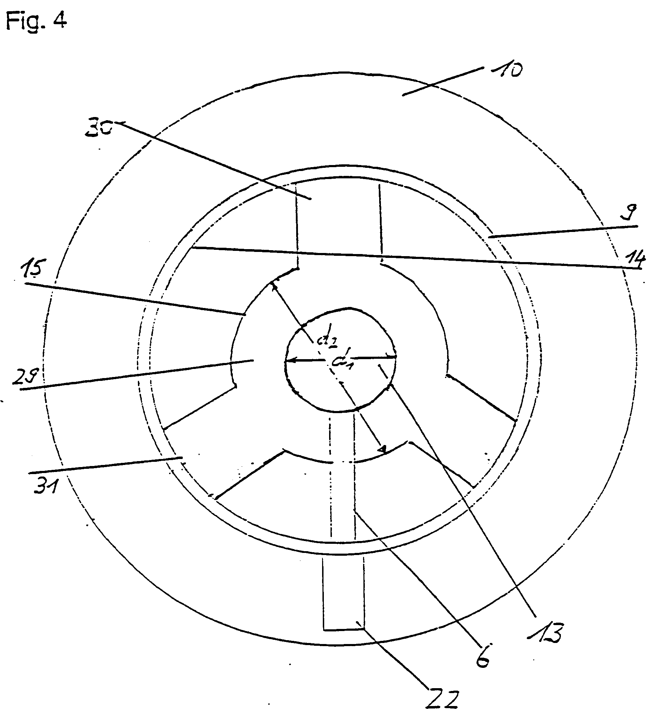

Wie am deutlichsten aus den Figuren 1 und 3 hervorgeht, besitzt das Grill- und Kochgerät 1 ein kreiszylindrisches Unterteil 8,das sich an deinem oberen Rand 9 unter Bildung eines Rahmengestells 3 in ein sich stufenmäßig nach außen erweiterndes,schüsselartiges Oberteil 10 fortsetzt,dessen Boden 11 eine Erhebung 27 aufweist, die von einer Sammelrinne 28 umfaßt ist und die eine mittige Öffnung 12 aufweist. Unterhalb des Bodens 11 des Oberteils 10 ist am Innenmantel 14 des Unterteils 8 eine Halterungseinrichtung 15 befestigt` von der das Gehäuse 13 eines Brenners 5 zentrisch in der Bodenöffnung 12 des Oberteils 10 gehaltert ist. Wie Fig. 3 und 4 verdeutlichen, weist die Halterungseinrichtung 15 eine kreisringförmige Platte 29 auf, deren Innendurchmesser d₁ geringfügig größer als der Außendurchmesser des kreiszylindrischen Gehäuses 13 des Brenners 5 und deren Außendurchmesser kleiner als der Durchmesser der Bodenöffnung 12 des Oberteils 10 des Rahmengestells 3 ist. Die kreisringförmige Platte 29 weist ferner drei mit ihr einstückig ausgebildete Stege 30 auf,die zueinander um 120^{o} versetzt sind und sich vom Außenumfang der kreisringförmigen Platte 29 in deren Ebene zum Innenmantel 14 des kreiszylindrischen Unterteils 8 des Rahmengestells 3 erstrecken. An ihren zur Platte 29 entgegengesetzten Enden weisen die Stege 30 jeweils einen sich rechtwinklig abwärts erstreckenden Befestigungsflansch 32 auf, der am Innenmantel 14 des Unterteils 8 befestigt ist und an seinen vertikal verlaufenden Kanten 33 jeweils eine im rechten Winkel abgewinkelte, sich in den Innenraum 34 des kreiszylindrischen Unterteils 8 erstreckende, gleichartige Befestigungslasche 35 aufweist. Die unteren horizontalen Kanten 36 jeder Befestigungslasche weisen jeweils eine Auskragung 37 auf, die für das zugeordnete Standbein 2 im Betriebszustand des Grill- und Kochgerätes 1 eine Arretierung bilden, an der das Standbein 2 nur durch Kraftanwendung vorbeigedrückt werden kann. Mittig durch die Befestigungslasche läuft eine Schwenkachse 18 senkrecht zum zugeordneten Steg 30 der kreisringförmigen Platte 29 , an der das obere Ende 17 des Jeweils zugeordneten von drei Standbeinen 2 des Grill- und Kochgerätes 1 drehbar gelagert ist.

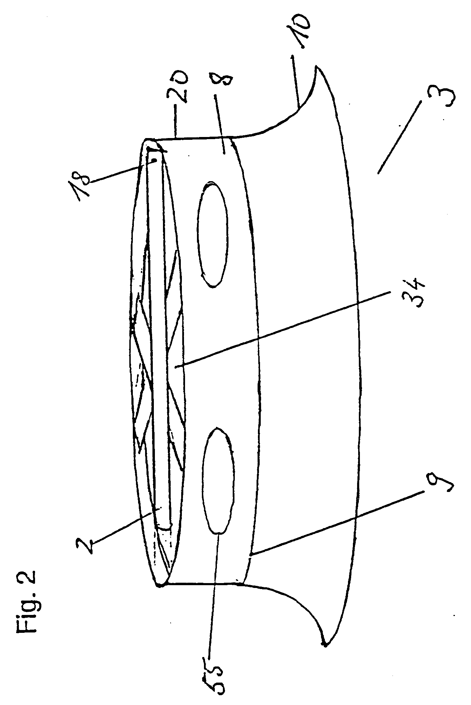

Durch die Halterungseinrichtung 15 sind drei Standbeine 2, deren Länge kürzer als der Innendurchmesser des kreiszylindrischen Unterteils 8 des Rahmengestells 3 ist, wie aus Fig. 2 am besten hervorgeht,jeweils um 120^{o} zueinander versetzt mit ihrem oberen Ende 17 so verschwenkbar gehaltert` daß sie im Lager- bzw. Transportzustand des Grill- und Kochgerätes 1 in dem kreiszylindrischen Unterteil 8 übereinanliegend und sich kreuzend versenkt und parallel zur Halterungseinrichtung 15 angeordnet sind und im Betriebszustand des Grill- und Kochgerätes 1 in die arretierte Stellung verschwenkt sind, in der sie unter einem spitzen Winkel nach außen zu der durch ihre Schwenkachse 18 verlaufenden Vertikalen 19 angeordnet sind und den Innenmantel 14 des kreiszylindrischen Unterteils 8 berühren.

Wie aus den Fig. 3 und 4 hervorgeht, ist der Innendurchmesser der ringförmigen Platte 29 der Halterungseinrichtung 15 geringfügig größer als der Außendurchmesser des Gehäuses 13 des Brenners 5, so daß dieser in einem geeignetem Paßsitz so in der Öffnung der kreisringförmigen Platte 29 aufgenommen ist, daß seine obere Fläche 51 geringfügig unterhalb der Ebene der oberen Fläche der Erhebung 27 des Bodens 11 des Obereteils 10 des Rahmengestells 3 angeordnet ist.

Aus Fig. 1 ist ersichtlich, das ein Gaszuführungsrohr 6 einerseits in das Gehäuse 13 des Brenners 5 mündet und andererseits die Wand 20 des kreiszylindrischen Unterteils 8 durchsetzend in einen sich von dessen Außenmantel 21 nach außen erstreckenden Anschlußflansch 22 ausläuft. Mit letzrem ist ein Anschlußrohr 24 eines Standbehälters 25, der ein Brennstoffreservoir 7 darstellt, mittels eines Bajonettverschlusses geeignet lösbar verbunden. Der Standbehälter 25 weist ein domartiges Oberteil 40 und ein Unterteil 41 auf, die lösbar miteinander verschraubt sind. Das Oberteil 40 ist an seiner oberen Fläche 41 zu einem mit ihm einstückig ausgebildeten Anschlußzapfen 42 ausgebildet, in dem innen das Druckventil 43 eines im Standbehälter 25 vorgesehenen auswechselbaren Druckgasbehälters 26 im miteinander verschraubten Zustand des domartigen Oberteils und des Unterteils 41 des Standbehälters 25 geöffnet aufgenommen ist. Von dem Anschlußzapfen ist das Anschlußrohr 24 nach außen geführt, in dem ein Stellventil 23 vorgesehen ist, das mittels eines Handstellrades 58 geeignet geöffnet und geschlossen werden kann.

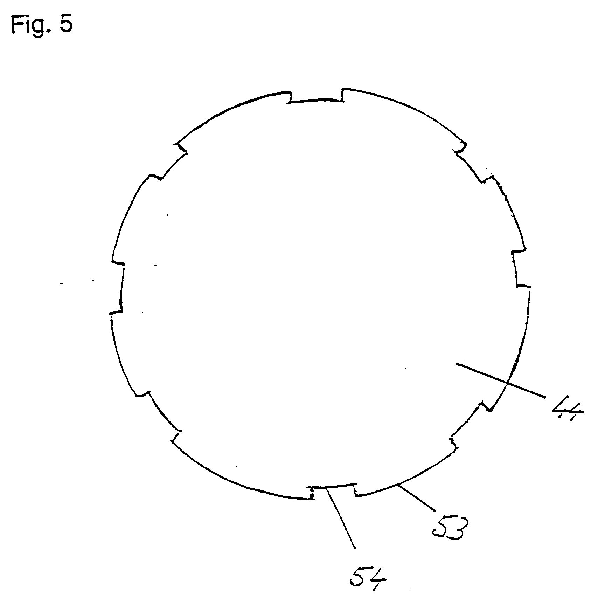

Fig. 3 verdeutlicht, daß die Auflage 4 für das Grillgut die Öffnung 12 des Bodens 11 des Oberteils 10 überdeckt und auf dem Oberteil 10 abnehmbar gehaltert ist, wobei Durchzugsöffnungen 16 zwischen dem Oberteil 10 und der Auflage 4 gegeben sind. Die Auflage 4 für das Grillgut ist als schalenartige Platte ausgeführt (Fig. 3), wobei auf der konveren Fläche 45 der Platte 44, die bevorzugt aus Aluminium hergestellt ist, eine Teflonbeschichtung 46 aufgebracht ist. Fig. 5 verdeutlicht,daß am Umfang 53 der Auflage 4 für das Grillgut im gleichen Abstand zueinander angeordnete Lüftungslöcher 55 vorgesehen sind.

Anstelle der Auflage 4 für das Grillgut kann auch eine Auflage 4 für einen Kochtopf, eine Pfanne oder dgl. vorgesehen sein, die in Fig. 3 aus Gründen der Vereinfachung zusätzlich zur Auflage 4 für das Grillgut dargestellt ist. Diese Auflage ist aus konzentrischen, zueinander beabstandeten Metallringen 47 gebildet, die durch im Abstand von 120^{o} zueinander versetzte Trägerelemente 48 verbunden sind, deren Enden 49 und 50 unter Bildung von Stützflächen jeweils abgewinkelt sind. Wie Fig. 3 zeigt, sind die Enden der Trägerelemente 49 bzw. 50 einerseits auf dem Boden 11 des Oberteils 10 des Rahmengestells 3 in der Sammelrinne 28 und andererseits auf der oberen Fläche 51 des Brenners 5 so abgestützt, daß die tragende Fläche 52 der Auflage 4 parallel zum Boden 11 des Oberteils 10 im Abstand oberhalb der Ebene liegt, in der die obere Fläche 51 des Brenners 5 liegt.

Fig. 3 verdeutlicht schließlich, daß zur Verbesserung der Standsicherheit des Grill- und Kochgerätes 1 die unteren Enden 38 der Standbeine 2 nach außen abgewinkelt sein können, so daß jeweils eine Standfläche 38 gegeben ist. Wie in den Figuren 1 und 2 zu sehen ist, können am Umfang 53 des Unterteils 8 des Rahmengestells 3 ebenfalls Lüftungslöcher 55 ausgebildet sein, die über den Umfang 53 im gleichen Abstand zueinander angeordnet sind.

Fig. 3 zeigt, daß vorteilhafterweise in der Halterungseinrichtung 15, von der das Gehäuse des Brenners zentrisch in der Bodenöffnung des Oberteils gehaltert ist, in unmittelbarer Nähe des Brenners 5 ein Gasanzünder 72 befestigt sein kann, der über eine im kreiszylindrischen Unterteil 8 des Rahmengestells gehalterte Druckfedereinrichtung 73 mittels eines Druckknopfes 74 betätigbar ist.Vorzugsweise wird der Gasanzünder 72 von einem piezoelektrischen Element gebildet.

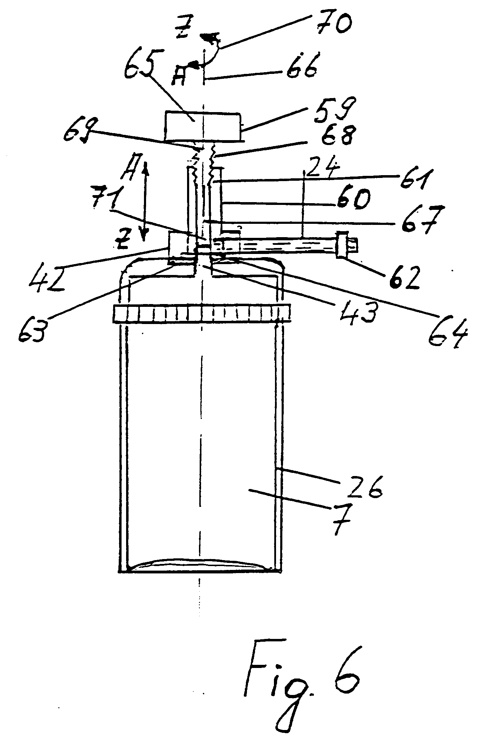

Bei einer bevorzugten Ausführungsform des erfindungsgemäßen Grill- und Kochgerätes ist, wie aus Fig. 6 ersichtlich ist, ein im Anschlußzapfen 42 des domartigen Oberteils 40 des Standbehälters 25 in dessen vertikaler Achse 66 angeordnetes Stellventil 59 zur Feinregulierung der Gaszufuhr vom Druckgasbehälter 26 zu dem mit dem Brenner 5 verbundenen Anschlußrohr 24 vorgesehen. Das Druckventil 43 des Druckgasbehälters 26 ist hier in einer Öffnung 64 des Anschlußzapfens 42 so aufgenommen, daß es von einer in der vertikalen Achse 66 des Anschlußzapfens 42 bewegbaren, gewindemäßig geführten Kolbenstange 67 des im Anschlußzapfen 42 gehalterten Stellventils 59 schrittweise geöffnet oder geschlossen werden kann, wobei die strömungsmäßige Verbindung zwischen dem Druckgasbehälter 26 und dem vom Anschlußzapfen 42 nach außen geführten Anschlußrohr 24 feinstufig regulier- bzw. unterbrechbar ist.

Am Außenende 68 der im Gehäuse 60 des Stellventils 59 gewindemäßig geführten Kolbenstange 67 ist ein Drehrad 65 vorgesehen, bei dessen Drehung in Uhrzeiger- oder Gegenuhrzeigerrichtung das Druckventil 43 des Druckgasbehälters 26 vom Innenende 71 der Kolbenstange 67 stufenweise geöffnet bzw. geschlossen wird, wobei die Gasströmung vom Druckgasbehälter 26 in das vom Anschlußzapfen 42 nach außen geführte und mit dem Brenner 5 verbundene Anschlußrohr 24 stufenweise vergrößert bzw. gedrosselt wird.

Das in der Öffnung 64 des Anschlußzapfens 42 aufgenommene Druckventil 43 des Druckgasbehälters 26 ist außen von einer geeigneten Abdichtung 63 umfaßt.

### Liste der Bezugszeichen

- 1: Grill- und Kochgerät
- 2: Standbeine
- 3: Rahmengestell
- 4: Auflage
- 5: Brenner
- 6: Brennstoffzuführung / Gaszuführungsrohr
- 7: Brennstoffreservoir
- 8: Unterteil des Rahmengestells
- 9: oberer Rand des Unterteils
- 10: Oberteil des Rahmengestells
- 11: Boden des Oberteils
- 12: Öffnung des Bodens
- 13: Gehäuse des Brenners
- 14: Innenmantel des Unterteils
- 15: Halterungseinrichtung
- 16: Durchzugsöffnungen
- 17: oberes Ende der Standbeine
- 18: Schwenkachse
- 19: durch die Schwenkachse verlaufende Vertikale
- 20: Wand des Unterteils
- 21: Außenmantel des Uncerteils
- 22: Anchlußflansch
- 23: Stellventil
- 24: Anschlußrohr
- 25: Standbehälter
- 26: Druckgasbehälter
- 27: Erhebung des Bodens 11
- 28: Sammelrinne
- 29: Platte der Halterungseinrichtung
- 30: Steg
- 31: Ende des Stegs
- 32: Befestigungsflansch
- 33: vertikale Kanten das Befestigungsflansches
- 34: Innenraum des Unterteils
- 35: Befestigungslasche
- 36: horizontale Kanten der Befestigungslasche
- 37: Auskragung
- 38: unteres Ende der Standbeine
- 39: Standfläche
- 40: domartiges Oberteil des Standbehälters
- 41: Unterteil des Standbehälters
- 42: Anschlußzapfen des domartigen Oberteils
- 43: Druckventil des Druckgasbehälters
- 44: Aluminiumplatte
- 45: konvexe Fläche der Aluminiumplatte
- 46: Teflonbeschichtung
- 47: Metallringe
- 48: Trägerelemente
- 49: Enden der Trägerelemente
- 50: Enden der Trägerelemente
- 51: obere Fläche des Brenners
- 52: tragende Fläche der Auflage für Kochtöpfe
- 53: Unfang der Grillauflage
- 54: Lüftungslöcher der Grillauflage
- 55: Lüftungslöcher des Unterteils des Rahmengestells
- 56: Bajonettverschluß
- 57: Standfläche des Brennstoffreservoirs
(des Standbehälters)
- 58: Handstellrad des Stellventils
- d₁: Innendurchmesser der kreisringförmigen Platte
- d₂: Außendurchmesser der kreisringförmigen Platte
- 59: Stellventil
- 60: Gehäuse des Stellventils
- 61: Gewinde am Gehäuse des Stellventils
- 62: Gewindemutter
- 63: Abdichtung
- 64: Öffnung
- 65: Drehrad
- 66: vertikale Achse des Anschlußzapfens
- 67: Kolbenstange
- 68: Gewinde der Kolbenstange
- 69: Außenende der Kolbenstange
- 70: Pfeil
- A: geöffnetes Druckventil
- Z: geschlossenes Druckventil
- 71: Innenende der Kolbenstange
- 72: Gasanzünder
- 73: Druckfedereinrichtung
- 74: Druckknopf

## Patentansprüche

1. Grill- und Kochgerät (1), insbesondere Tischgrill, mit einem Standbeine (2) aufweisenden Rahmengestell (3), einer Auflage (4) für Grillgut und/oder einen Kochtopf, eine Pfanne oder dgl. und mit einem mittig im Rahmengestell (3) angeordneten Brenner (5), der über eine Brennstoffzuführung (6) mit einem Brennstoffreservoir (7) verbunden ist,
dadurch gekennzeichnet,
daß das Rahmengestell (3) ein kreiszylindrisches Unterteil (8) aufweist, das sich an seinem oberen Rand (9) in ein sich stufenmäßig nach außen aufweitendes, schüsselartiges Oberteil (10) fortsetzt, dessen Boden (11) eine zentrische Öffnung (12) hat, deren Durchmesser größer als der Durchmesser des Gehäuses (13) des Brenners (5) ist,
daß unterhalb des Bodens (11) des Oberteils (10) am Innenmantel (14) des Unterteils (8) eine Halterungseinrichtung (15) befestigt ist, von der das Gehäuse (13) des Brenners (5) zentrisch in der Bodenöffnung (12) des Oberteils (10) gehaltert ist,
daß die Auflage (4), die Öffnung (12) des Bodens (11) des Oberteils (10) überdeckend, auf diesem abnehmbar gehaltert ist, wobei Durchzugsöffnungen (16) zwischen dem Oberteil (10) und der Auflage (4) gegeben sind,
daß drei Standbeine (2), deren Länge kürzer als der Innendurchmesser des kreiszylindrischen Unterteils (8) des Rahmengestells (3) ist, jeweils um 120^{o} zueinander versetzt an der Halterungseinrichtung (15) mit ihrem oberen Ende (17) so verschwenkbar gehaltert sind, daß sie in einem Lager- bzw. Transportzustand des Grill- und Kochgerätes (1) in dem kreiszylindrischen Unterteil (8) übereinanderliegend und sich kreuzend versenkt und parallel zur Halterungseinrichtung (15) angeordnet sind, und im Betriebszustand des Grill- und Kochgerätes (1) in eine arretierte Stellung verschwenkt sind, in der sie unter einem spitzen Winkel nach außen zu der durch ihre Schwenkachse (18) verlaufenden Vertikalen (19) angeordnet sind und den Innenmantel (14) des kreiszylindrischen Unterteils (8) berühren,
und daß ein Gaszuführungsrohr (6) einerseits in das Gehäuse (13) des Brenners (5) mündet und andererseits die Wand (20) des kreiszylindrischen Unterteils (8) durchsetzend in einem sich von dessen Außenmantel(21) nach außen erstreckenden Anschlußflansch (22) ausläuft, mit dem trennbar ein Anschlußrohr (24) eines Standbehälters (25) verbunden ist, in dem auswechselbar ein mit dem Anschlußrohr (24) des Standbehälters (25) über ein Stellventil (25,59) strömungsmäßig verbindbarer Druckgasbehälter (26) aufgenommen ist.

2. Grill- und Kochgerät nach Anspruch 1, dadurch gekennzeichnet, daß der Boden (11) des Oberteils (10) des Rahmengestells (3) eine mittige, die Öffnung (12) aufweisende Erhebung (27) hat, die von einer Sammelrinne (28) umfaßt ist.

3. Grill- und Kochgerät nach Anspruch 2 , dadurch gekennzeichnet, daß das Unterteil (8) und das Oberteil (10) des Rahmengestells (3) ein einstückiges Formteil sind.

4. Grill- und Kochgerät nach Anspruch 1, dadurch gekennzeichnet, daß die Halterungseinrichtung (15) eine kreisringförmige Platte (29) aufweist, deren Innendurchmesser (d₁) geringfügig größer als der Außendurchmesser des kreiszylindrischen Gehäuses (13) des Brenners (5) und deren Außendurchmesser (d₂) kleiner als der Durchmesser der Bodenöffnung (12) des Oberteils (10) des Rahmengestells (3) ist, und daß die kreisringförmige Platte (29) drei mit ihr einstückig ausgebildete Stege (30) aufweist, die zueinander um 120^{o} versetzt sind und sich vom Außenumfang der kreisringförmigen Platte (29) in deren Ebene zum Innenmantel (14) des kreiszylindrischen Unterteils (8) des Rahmengestells (3) erstrecken, an ihren zur Platte (29) entgegengesetzten Enden (31) jeweils einen sich rechtwinklig abwärts erstreckenden Befestigungsflansch (32) aufweisen, der am Innenmantel (14) des Unterteils (8) befestigt ist und an seinen vertikal verlaufenden Kanten (33) jeweils eine im rechten Winkel abgewinkelte, sich in den Innenraum (34) des kreiszylindrischen Unterteils (8) erstreckende, gleichartige Befestigungslasche (35) aufweist, deren untere horizontale Kante (36) jeweils eine eine Arretierung bildende Auskragung (37) aufweist und in denen mittig, sich senkrecht zum zugeordneten Steg (30) der kreisringförmigen Platte (29) erstreckend die Schwenkachse (18) geführt ist, an der das obere Ende (17) des zugeordneten Standbeins (2) drehbar gelagert ist.

5. Grill- und Kochgerät nach Anspruch 4, dadurch gekennzeichnet, daß das untere Ende (38) der Standbeine (2) unter Bildung einer Standfläche (39) nach außen abgewinkelt ist.

6. Grill- und Kochgerät nach Anspruch 1 und 4, dadurch gekennzeichnet, daß die Standbeine (2) teleskopartig ausgebildet sind.

7. Grill- und Kochgerät nach Anspruch 1, dadurch gekennzeichnet, daß der Standbehälter (25) ein domartiges Oberteil (40) aufweist, das mit dem Unterteil (41) abnehmbar verschraubt ist und an seiner oberen Fläche (41) zu einem mit ihm einstückig ausgebildeten Anschlußzapfen (42) ausgebildet ist, in dem innen das Druckventil (43) des auswechselbaren Druckgasbehälters (26) im verschraubten Zustand des domartigen Oberteils (40) und Unterteils(41) des Standbehälters (25) geöffnet aufgenommen ist und von der nach außen das das Stellventil (23) aufweisende Anschlußrohr (24) geführt ist.

8. Grill- und Kochgerät nach Anspruch 1, dadurch gekennzeichnet, daß die Auflage (4) für das Grillgut von einer gewölbten Aluminiumplatte (44) gebildet ist, deren konvexe Oberfläche (45) eine Teflonbeschichtung (46) aufweist.

9. Grill- und Kochgerät nach Anspruch 1, dadurch gekennzeichnet, daß die Auflage (4) für einen Kochtapf, eine Pfanne oder dgl. aus konzentrischen, zu einander beabstandeten Metallringen (47) gebildet ist, die durch im Abstand von 120^{o} zueinander versetzte Trägerelemente (48) verbunden sind, deren Enden (49,50) unter Bildung von Stützflächen jeweils abgewinkelt sind und einerseits auf dem Boden (11) des Oberteils (10) des Rahmengestells (3) in der Sammelrinne (28) und andererseits auf der oberen Fläche (51) des Brenners (5) so abgestützt sind, daß die tragende Fläche (52) der Auflage (4) parallel zum Boden (11) des Oberteils (10) im Abstand oberhalb der Ebene liegt, in der die obere Fläche (51) des Brenners (5) liegt.

10. Grill- und Kochgerät nach einem der Ansprüche 1 bis 4, dadurch gekennzeichnet, daß die Bodenöffnung (12) des Oberteils (10) einen Durchmesser hat, der etwa dreimal so groß wie der Durchmesser des Brenners (5) ist.

11. Grill- und Kochgerät nach Anspruch 8, dadurch gekennzeichnet, daß die Auflage (4) in an ihrem Umfang (53) in gleichem Abstand zueinander angeordnete Lüftungslocher (54) aufweist.

12. Grill- und Kochgerät nach Anspruch 4, dadurch gekennzeichnet, daß das Unterteil (8) des Rahmengestells über seinem Umfang im gleichen Abstand zueinander angeordnete Lüftungslöcher (55) aufweist.

13. Grill- und Kochgerät nach Anspruch 1, dadurch gekennzeichnet, daß das der Anschlußflansch (22) des Gaszuführungsrohres (6) und das Anschlußrohr (24) des Druckgasbehälters (26) mittels eines Bajonettverschlusses (56) verbindbar sind.

14. Grill- und Kochgerät nach Anspruch 1, dadurch gekennzeichnet, daß die Standfläche (57) des das Brennstoffreservoir (7) bildenden Standbehälters (25) in der Ebene der Standfläche (39) der Standbeine (2) liegt.

15. Grill- und Kochgerät nach Anspruch 1, dadurch gekennzeichnet, daß der Anschlußflansch (22) des Gaszuführungsrohres (6) und das Anschlußrohr (24) des Druckgasbehälters (26) mittels einer Gewindemutter (62) verbindbar sind.

16. Grill- und Kochgerät nach Anspruch 1, dadurch gekennzeichnet, daß der Standbehälter (25) ein domartiges Oberteil (40) aufweist, das mit dem Unterteil (41) abnehmbar verschraubt und an seiner oberen Fläche (41) zu einem mit ihm einstückig ausgebildeten Anschlußzapfen (42) ausgebildet ist, in dem bei im Standbehälter (25) vorgesehenen Druckgasbehälter (26) dessen Druckventil (43) derart aufgenommen ist, daß es von einer in der vertikalen Achse (66) des Anschlußzapfens bewegbaren, gewindemäßig geführten Kolbenstange (67) des im Anschlußzapfen (42) gehalterten Stellventils (59) schrittweise geöffnet oder geschlossen werden kann, wobei die strömungsmäßige Verbindung zwischen dem Druckgasbehälter (26) und dem vom Anschlußzapfen (42) nach außen geführten Anschlußrohr (24) feinstufig regulier- bzw. unterbrechbar ist.

17. Grill- und Kochgerät nach Anspruch 16,dadurch gekennzeichnet, daß am Außenende (68) der im Gehäuse (60) des Stellventils (59) gewindemäßig geführten Kolbenstange (67) ein Drehrad (65) vorgesehen ist, bei dessen Drehung in Uhrzeiger- oder in Gegenuhrzeigerrichtung das Druckventil (43) des Druckgasbehälters (26) vom Innenende (71) der Kolbenstange (67) stufenweise geöffnet bzw. geschlossen wird, wobei die Gasströmung vom Druckgasbehälter (26) in das vom Anschlußzapfen (42) nach außen geführte und mit dem Brenner (5) verbundene Anschlußrohr (24) stufenweise vergrößert bzw. gedrosselt wird.

18. Grill- und Kochgerät nach Anspruch 17, dadurch gekennzeichnet, daß das Druckventil (43) des Druckgasbehälters (26) bei Anordnung im Anschlußzapfen (42) außen von einer Abdichtung (63) umfaßt ist.

19. Grill- und Kochgerät nach Anspruch 1, dadurch gekennzeichnet, daß in der Halterungseinrichtung (15), von der das Gehäuse (13) des Brenners (5) zentrisch in der Bodenöffnung (12) des Oberteils (10) gehaltert ist, in unmittelbarer Nähe des Brenners (5) ein Gasanzünder (72) befestigt ist, der über eine im kreiszylindrischen Unterteil (8) des Rahmengestells (3) gehalterte Druckfedereinrichtung (73) per Hand betätigbar ist.

20. Grill- und Kochgerät nach Anspruch 19,dadurch gekennzeichnet, daß der Gasanzünder (72) ein piezoelektrisches Element aufweist.

## Claims

1. Barbecue and cooking device (1) in particular barbecue table with a frame (3) which has standing legs (22), a top plate (4) for barbecues and/or a cooking pot, a pan or the like and with a centrically in the frame (3) arranged burner (5) which is connected with a fuel reservoir (7) via a fuel fuel supply device (6)
characterized thereby
that the frame (3) has a circular cylindrical bottom part (8) continuing stepwise at its upper edge (9) into a dish-like upper part (10) widening up to the outside, the bottom (11) of which has a centrical opening (12) of which the diameter is larger than the diameter of the burner's (5) casing (13),
that below the bottom (11) of the upper part (10) at the internal lining (14) of the bottom part (8) a holding device (15) is fixed from which the housing (13) of the burner (5) is centrically fixed in the bottom opening (12) of the upper part (10),
that the top plate (4) which covers the opening (12) of the bottom (11) of the upper part (10) is fixed in a detachable form on same, whereby ventilation openings (16) are provided between the upper part (10) and the top plate (4),
that three standing legs (2), the lengths of which are shorter than the internal diameter of the circular cylindrical bottom part (8) of the frame (3), are, in each case, held slewably offset to each other by 120° at the holding device (15) with their upper end (17) that they, in the storage and/or transport condition of the barbecue and cooking device (1), are arranged in the circular cylindrical bottom part (8) one on top of the other and crossing themselves in a countersunk and parallel to the holding device (15) manner and that they, when the barbecue and cooking device (1) is in its operating condition, are horiziontally swivelled into a fixed position in which they are arranged under a sharp-cornered angle towards the outside to the vertical (19) running through its swivelling axis (18) and contact the internal lining (14) of the circular cylindrical bottom part (8),
and that a gas feeding pipe (6) leads on the one hand into the casing (13) of the burner (5) and on the other hand runs out through the wall (20) of the circular cylindrical bottom part's (8) external casing (21) into a connecting flange (22) extending towards the outside, with which a joining pipe (24) of a standing vessel (25) is separably connected, in which a gas cylinder (26) is exchangeably accommodated, which can, as regards the flow, be connected via a control valve (25, 59) with the joining pipe (24) of the standing vessel (25).

2. Barbecue and cooking device in accordance with claim 1, characterized thereby that the bottom (11) of the upper part (10) of the frame (3) has a centered elevation, surrounded by a collecting groove (28), with the opening (12).

3. Barbecue and cooking device in accordance with claim 2, characterized thereby that the bottom part (8) and the upper part (10) of the frame (3) consists of one piece.

4. Barbecue and cooking device in accordance with claim 1, characterized thereby that the holding device (15) has a circular ring shaped plate (29), the internal diameter of which (d ₁) is slightly larger than the external diameter of the circular cylindrical casing (13) of the burner (5) and the external diameter of which (d ₂) is smaller than the diameter of the bottom opening (12) of the upper part (10) of the frame (3) and that the circular ring shaped plate (29) has, formed with it in one piece, three webs (30) which are offset to each other by 120° and extend from the external area of the circular cylindrical plate (29) in its level towards the internal lining (14) of the circular cylindrical bottom part (8) of the frame (3), have at their ends (31) opposite to the plate (29) in each case one, in a right angle downwards extending fixing flange (32) being fixed to the internal lining (14) of the bottom part (8) and has at each of its vertically running edges (33) one fixing strap each of the same kind (35) which are bent in a right angle and extend into the internal space (34) of the circular cylindrical bottom part (8), whereby the lower horizontal edge (36) of the fixing straps (35) has in each case one projection (37) forming a fixing and in which the swivelling axis (18), which extends vertically to the allocated web (30) of the circular ring shaped plate (29), is led centrically and at which the upper end (17) of the allocated standing leg (2) is pivoted.

5. Barbecue and cooking device in accordance with claim 4, characterized thereby that the lower end (38) of the standing legs (2). by forming a floor space (39), are bent towards the outside.

6. Barbecue and cooking device in accordance with the claims 1 and 4, characterized thereby that the standing legs (2) are telescope-shaped.

7. Barbecue and cooking device in accordance with claim 1, characterized thereby that the standing vessel (25) has a dome-shaped upper part (40) which is screwed together with the bottom part (41) in a detachable manner and is, at its upper surface (41) formed into a on-piece connection shank (42), in the inside of which the pressure valve (43) of the exchangeable gas cylinder (26) is, in the screwed condition of the dome-like upper part (40) and bottom part (41) of the standing vessel, accommodated in the open condition and from which the connecting pipe (24) with the control valve (23) is led to the outside.

8. Barbecue and cooking device in accordance with claim 1, characterized thereby that the top plate (4) for barbecues is formed by a convex aluminium plate (44) the convex surface of which (45) is coated with Teflon (46).

9. Barbecue and cooking device in accordance with claim 1, characterized thereby that the top plate (4) for a cooking pot, a pan or the like is formed of concentric, in a distance to each other arranged metal rings (47) which are connected by carrier elements (48), offset to each other in a distance of 120°, the ends of which (49, 50) are in each case bent and are, on the one hand, supported on the bottom (11) of the upper part (10) of the frame (3) in the collecting groove (28) and, on the other hand, on the upper surface (51) of the burner (5) in such a manner that the carrying surface (52) of the top plate (4) lies parallel to the bottom (11) of the upper part (10) in a distance above the level in which the upper era (51) of the burner is lying.

10. Barbecue and cooking device in accordance with one of the claims 1 to 4 characterized thereby that the bottom opening (12) of the upper part (10) has a diameter which is three times the size of the burner's diameter (5).

11. Barbecue and cooking device in accordance with claim 8, characterized thereby that the top plate (4) has over its area (53) ventilation holes (54) which are arranged in the always same distance to each other.

12. Barbecue and cooking device in accordance with claim 4, characterized thereby that the bottom part (8) of the frame has ventilation holes (55) which are arranged in the always same distance to each other over its area.

13. Barbecue and cooking device in accordance with claim 1, characterized thereby that the connecting flange (22) of the gas feeding pipe (6) and the connecting pipe (24) of the gas cylinder (26) can be connected by means of a bayonet catch (56).

14. Barbecue and cooking device in accordance with claim 1, characterized thereby that the floor space (57) of the standing vessel (25) forming the fuel reservoir (7) is lying on the level of the floor space (39) of the standing legs (2).

15. Barbecue and cooking device in accordance with claim 1, characterized thereby that the connecting flange (22) of the gas feedig pipe (6) and the connecting pipe (24) of the gas cylinder (26) can be connected by means of a threaded nut (62).

16. Barbecue and cooking device in accordance with claim 1, characterized thereby that the standing vessel (25) has a dome-like upper part (40) which is screwed together with the bottom part (41) in a detachable manner and is formed at its upper surface (41) into a connection shank formed with it into one piece (42), in which at the gas cylinder (23) which is provided in the standing vessel (25) the pressure valve (43) is accommodated in such a manner that it can be stepwise opened or closed by a piston-rod (67) of the control valve (59) which is led in the vertical axis (66) of the connection shank (42) in a movable and thread-like manner, whereby the connection as regards the flow between the gas cylinder (26) and the connecting pipe (24) which is led from the connection shank (42) towards the outside can be precisely adjusted and/or interrupted.

17. Barbecue and cooking device in accordance with claim 16, characterized thereby that at the external end (68) of the piston-rod (67) which is led in a threadlike manner in the casing (60) of the control valve (59), a turning wheel (65) is provided, at the clockwise or counterclockwise turn of which the pressure valve (43) of the gas cylinder (26) is stepwise opened or closed from the inner end (71) of the piston-rod (67) whereby the gas flow from the gas cylinder (26) into the connecting pipe (24) being led to the outside by the connection shank (42) and connected with the burner (5) is stepwise increased or throttled.

18. Barbecue and cooking device in accordance with claim 17, characterized thereby that the pressure valve (43) of the gas cylinder (26), when arranged in the connection shank (42), is surrounded on its outside by a sealing (63).

19. Barbecue and cooking device in accordance with claim 17, characterized thereby that in the direct vicinity of the burner (5) in the holding device (15) by which the casing (13) of the burner (5) is held centrically in the bottom opening (12) of the upper part (10), a gas lighter (72) is fixed which can be manually operated via a pressure spring device (73) held via a circular-cylindrical bottom part (8) of the frame (3).

20. Barbecue and cooking device in accordance with claim 17, characterized thereby that the gas lighter (72) has a piezo-electric element.

## Revendications

1. Appareil de barbecue et de cuisson (1), en particulier table de barbecue, avec un bâti (3) avec des montants (2), un support (4) pour la grillade et/ou une marmite, une poêle ou similaire et avec un brûleur (5) disposé au centre du bâti (3) relié à un réservoir de combustible (7) par-dessus une alimentation de combustible (6),
caractérisé par le fait
que le bâti (3) présente une partie inférieure cylindrique circulaire (8) se poursuivant à son bord supérieur (9) en une partie supérieure en forme de plat (10) s'élargissant vers l'extérieur graduellement dont le fond (11) dispose d'une ouverture centrique (12), dont le diamètre est supérieur au diamètre du boîtier (13) du brûleur (5),
qu'en-dessous du fond (11) de la partie supérieure (10) un dispositif de fixation (15) est fixé à l'enveloppe intérieure (14) de la partie inférieure (8) fixant centriquement le boîtier (13) du brûleur (5) dans l'ouverture de fond (12) de la partie supérieure (10),
que le support (4) revêtant l'ouverture (12) du fond (11) de la partie supérieure (10) est fixé sur celui-ci de manière amovible, des ouvertures de ventilation (16) étant réalisées entre la partie supérieure (10) et le support (4),
que trois montants (2) dont la longueur est inférieure au diamètre intérieur de la partie inférieure cylindrique circulaire (8) du bâti (3) sont fixés de manière pivotable avec leur bout supérieur (17) sur le dispositif de fixation (15) chacun décalé de 120° par rapport à l'autre de sorte que, dans un état de stockage ou de transport de l'appareil de barbecue et de cuisson (1), ils sont, superposés et croisés, enfoncés dans la partie inférieure (8) et
disposés parallélement au dispositif de fixation (15) et, en état de service de l'appareil de barbecue et de cuisson (1), sont pivotés dans une position arrêtée dans laquelle ils sont disposés sous un angle aigu vers l'extérieur par rapport à la verticale (19) passant par leur axe de pivotement (18) et touchent l'enveloppe intérieure (14) de la partie inférieure cylindrique circulaire (8),
et que d'une part un tube d'admission de gaz (6) débouche dans le boîtier (13) du brûleur (5) et d'autre part traversant la paroi (20) de la partie inférieure cylindrique circulaire (8) aboutit dans une bride de raccordement (22) s'étendant de son enveloppe extérieure (21) vers l'extérieur avec laquelle est relié de manière amovible un tube de raccordement (24) d'un réservoir fixe (25) dans lequel est disposé de manière amovible un cylindre à gaz comprimé (26) reliable, quant à l'écoulement, au tube de raccordement (24) du réservoir fixe (25) moyennant une soupape de réglage (25, 59).

2. Appareil de barbecue et de cuisson suivant revendication 1, caractérisé par le fait que le fond (11) de la partie supérieure (10) du bâti (3) dispose d'une bosse centrale (27) présentant l'ouverture (12) étant entourée d'une rigole collectrice (28).

3. Appareil de barbecue et de cuisson suivant revendication 2, caractérisé par le fait que la partie inférieure (8) et la partie supérieure (10) du bâti (3) sont un préformé en une pièce.

4. Appareil de barbecue et de cuisson suivant revendication 1, caractérisé par le fait que le dispositif de fixation (15) présente une plaque annulaire circulaire (29) dont le diamètre intérieur (d₁) est un peu supérieur au diamètre extérieur du boîtier cylindrique circulaire (13) du brûleur (5) et dont le diamètre extérieur (d₂) est inférieur au diamètre de l'ouverture du fond (12) de la partie supérieure (10) du bâti et que la plaque annulaire circulaire (29) présente trois âmes (30) formées en une pièce avec elle, décalées de 120° les unes par rapport aux autres et s'élongeant du périmètre extérieur de la plaque annulaire circulaire (29) dans son plan à l'enveloppe intérieure (14) de la partie inférieure cylindrique circulaire (5) du bâti (3), présentant chacune à leurs bouts opposés (31) à la plaque (29) une bride de fixation (32) s'étendant rectangulairement vers le bas fixée sur l'enveloppe intérieure (14) de la partie inférieure (8) et présentant respectivement sur ses arêtes verticales (33) une éclisse de fixation (35) similaire coudée rectangulairement s'élongeant dans l'espace intérieur (34) de la partie inférieure cylindrique circulaire (8) dont l'arête horizontale inférieurs (36') présente repectivement une saillie (37) constituant un arrêtage et dans lesquelles est guidé centralement l'axe de pivotement (18) s'étendant verticalement à l'âme respectif (30) de la plaque annulaire circulaire (29) et sur lequel est disposé de manière pivotante le bout supérieur (17) du montant respectif (2).

5. Appareil de barbecue et de cuisson suivant revendication 4, caractérisé par le fait que le bout inférieur (38) du montant (2) est coudé vers l'extérieur en formant une base (39).

6. Appareil de barbecue et de cuisson suivant revendications 1 et 4, caractérisé par le fait que les montants (2) sont constitués en télescope.

7. Appareil de barbecue et de cuisson suivant revendication 1, caractérisé par le fait que le réservoir fixe (25) présente une partie supérieure en forme de dôme (40) qui est vissée de manière amovible avec la partie inférieure (41) et qui forme à sa surface supérieure (41) un pivot de raccordement (42) constitué en une pièce avec celle-ci à l'intérieur duquel est disposée ouverte la soupape de refoulement (43) du cylindre à gaz comprimé échangeable (26) en état vissé de la partie supérieure en forme de dôme (40) et de la partie inférieure (41) du réservoir fixe (25) et à partir duquel le tube de raccordement (24) présentant la soupape de réglage (23) est mené vers l'extérieur.

8. Appareil de barbecue et de cuisson suivant revendication 1, caractérisé par le fait que le support (4) pour la grillade est constitué par une plaque en aluminium bombée (44) dont la surface convexe (45) présente un revêtement téflon (46).

9. Appareil de barbecue et de cuisson suivant revendication 1, caractérisé par le fait que le support (4) pour une marmite, une poêle ou similaire est constitué d'anneaux concentriques distants les uns des autres (47) reliés par des éléments porteurs (48) décalés dans une distance de 120° les uns aux autres dont les bouts (49, 50) sont coudés respectivement en formant des surfaces d'appui et appuyés d'une part sur le fond (11) de la partie supérieure (10) du bâti (3) dans la rigole collectrice (28) at d'autre part sur la surface supérieure (51) du brûleur (5) de manière que la surface portante (52) du support (4) est située parallèlement au fond (11) de la partie supérieure (10) dans l'espace au-dessus du plan dans lequel est situé la surface supérieure (31) du brûleur (5).

10. Appareil de barbecue et de cuisson suivant une des revendications 1 à 4, caractérisé par le fait que l'ouverture de fond (12) de la partie supérieure (10) a un diamètre trois fois plus grand que le diamètre du brûleur (5).

11. Appareil de barbecue et de cuisson suivant revendication 8. caractérisé par le fait que le support (4) présente sur sa périphérie (53) des évents (54) disposés dans une même distance les uns des autres.

12. Appareil de barbecue et de cuisson suivant revendication 4, caractérisé par le fait que la partie inférieure (8) du bâti présente sur sa périphérie des évents (55) disposés dans une même distance les uns des autres.

13. Appareil de barbecue et de cuisson suivant revendication 1, caractérisé par le tait que la bride de raccordement (22) du tube d'amenée du gaz (6) et le tube de raccordement (24) du cylindre à gaz comprimé (26) peuvent être reliés moyennant un joint à baionnette (56).

14. Appareil de barbecue et de cuisson suivant revendication 1, caractérisé par le fait que la base (57) du réservoir fixe (25) formant le réservoir à combustibles (7) est situé dans le plan de la base (39) des montants (2).

15. Appareil de barbecue et de cuisson suivant revendication 1, caractérisé par le fait que la bride de raccordement (22) du tube d'amenée du gaz (6) et le tube de raccordement (24) du cylindre à gaz comprimé (26) peuvent être reliés moyennant un écrou fileté (62).

16. Appareil de barbecue et de cuisson suivant revendication 1, caractérisé par le fait que le réservoir fixe (25) dispose d'une partie supérieure en forme de dôme (40) qui est vissée de manière amovible avec la partie inférieure (41) et qui forme à sa surface supérieure (41) un pivot de raccordement (42) constitué en une pièce avec celle-ci, dont la soupape de refoulement (43) est disposée dans le cylindre à gaz comprimé (26) prévu dans le réservoir fixe (25) de sorte qu'elle peut être ouverte ou fermée successivement par une tige (67) mobile guidée en filet dans l'axe verticale (66) du pivot de raccordement de la soupape de réglage (58) fixée dans le pivot de raccordement, la connexion, quant à l'écoulement, entre le cylindre à gaz comprimé (26) et le tube de raccordement (24) menant du pivot de raccordement (42) vers l'extérieur pouvant être réglée ou interrompue sensiblement.

17. Appareil de barbecue et de cuisson suivant revendication 16, caractérisé par le fait qu'au bout extérieur (68) de la tige (67) guidée en filet dans le boîtier (60) de la soupape de réglage (59) est prévue une roue de rotation (65) lors de la rotation de laquelle en sens horaire et en sens inverse horaire la soupape de refoulement (43) du cylindre à gaz comprimé (26) est ouverte ou fermée graduellement par le bout intérieur (71) de la tige (67), le courant de gaz du cylindre à gaz comprimé (26) vers le tube de raccordement (24) mené du pivot de raccordement (42) vers l'extérieur et relié au brûleur étant augmenté ou étranglé graduellement.

18. Appareil de barbecue et de cuisson suivant revendication 17, caractérisé par le fait que la soupape de pression (43) du cylindre à gaz comprimé (26) est, lors d'une disposition dans le pivot de raccordement (42) entouré à l'extérieur d'un joint d'étanchéité (63).

19. Appareil de barbecue et de cuisson suivant revendication 1, caractérisé par le fait que dans le dispositif de fixation (15) fixant centralement le boîtier (13) du brûleur (5) dans l'ouverture du fond de la partie supérieure(12) est fixé en proximité immédiate du brûleur(5) un allume-gaz pouvant être opéré manuellement par-dessus un dispositif à ressort de pression (73) fixé dans la partie inférieure (8) du bâti (3).

20. Appareil de barbecue et de cuisson suivant revendication 19, caractérisé par le fait que l'allume-gaz (72) dispose d'un élément piézoélectrique.
